# EUROPÄISCHE PATENTSCHRIFT

(11) **EP 1 835 240 B1**
(45) Veröffentlichungstag und Bekanntmachung des Hinweises auf die Patenterteilung: **23.12.2015**
(21) Anmeldenummer: 07004854.1
(22) Anmeldetag: 09.03.2007
(51) Int. Cl.: F24D 12/02, F23N 5/00, H01M 8/06, H01M 8/04, H01M 8/12

(54) **Verfahren zum Betreiben einer Kombination eines Heizgeräts mit einer Brennstoffzellenanlage**
Method of operating a combination of a heater with a fuel cell assembly
Procédé destiné au fonctionnement d'une combinaison appareil de chauffage/pile à combustible

(30) Priorität: 15.03.2006 AT 4152006
(43) Veröffentlichungstag der Anmeldung: 19.09.2007
(73) Patentinhaber: Vaillant GmbH, 42859 Remscheid (DE)
(72) Erfinder: Badenhop, Thomas, 51688 Wipperfürth (DE); Berg, Joachim, 42859 Remscheid (DE); Götz, Klaus, 42653 Solingen (DE); Kohlhage,Jörg, 45329 Essen (DE); Kraus, Matthias, 42929 Wermelskirchen (DE); Oerder, Bodo, 42855 Remscheid (DE); Paulus, Jochen, 42655 Solingen (DE)
(74) Vertreter: Hocker, Thomas

(56) Entgegenhaltungen:
- WO-A-00/74164
- DE-A1- 10 014 105
- DE-A1- 10 059 892
- DE-A1- 10 300 602
- DE-A1- 19 854 035
- DE-A1- 19 948 216
- DE-A1- 19 956 220

## Beschreibung

Die Erfindung bezieht sich auf eine Kombination eines Heizgerätes mit einer Brennstoffzellenanlage sowie ein dazugehöriges Verfahren zum Betreiben dieser Kombination.

Brennstoffzellenheizgeräte werden häufig in Kombination mit einem konventionellen Heizgerät betrieben. Hierbei produziert die Brennstoffzelle einerseits elektrische Energie. Andererseits wird die Abwärme zu Heizzwecken verwendet, wobei die Wärme sowohl zur Befriedigung von Brauchwasser-, als auch Raumwärmebedarf genutzt wird. Da insbesondere im Winter die Abwärme der Brennstoffzelle zum Beheizen von Wohngebäuden nicht ausreicht, wird daher häufig eine Brennstoffzelle mit einem konventionellen Heizgerät kombiniert. Das konventionelle Heizgerät wird zugeschaltet, wenn die Wärmeproduktion der Brennstoffzelle nicht ausreichend ist oder Wärme benötigt wird, ohne dass zeitgleich elektrische Energie benötigt wird, wobei diese auch nicht effizient zwischengespeichert werden kann. Das Abgas sowohl der Brennstoffzelle, als auch des Heizgerätes müssen abgeführt werden.

Aus der DE 100 14 105 A1 ist die Kombination eines Heizgerätes mit einer Brennstoffzellenanlage bekannt, wobei die Abgase beider Geräte zusammengeführt und gemeinsam über ein Abgasrohr abgeleitet werden. Koaxial zu diesem Abgasrohr wird Frischluft für beide Geräte angesaugt, das sodann auf die beiden Geräte verteilt wird.

Hierbei ergibt sich das Problem, dass die Abgasleitung, welche für die Kombination der beiden Geräte benötigt wird, einen sehr großen Durchmesser aufweisen muss.

Des Weiteren verfügt das Brennstoffzellenabgas häufig noch über nennenswerte Anteile thermischer Energie. Aus der DE 199 48 216 A1 ist daher bekannt, das Abgas einer Brennstoffzelle, welches aufgrund des hohen Luftüberschusses über einen sehr hohen Restsauerstoffanteil verfügt, als Oxidationsmittel für einen so genannten Luftstufenbrenner zu verwenden. Ein derartiger Luftstufenbrenner zeichnet sich dadurch aus, dass er mit einer Diffusionsflamme in einem breiten Brenngas-Luft-Verhältnis betrieben werden kann.

Die DE 198 54 035 A1 zeigt eine Kombination eines Heizgerätes mit einer Brennstoffzellenanlage, bei der eine Nachverbrennung der Abgase in der Brennstoffzellenanlage stattfindet. Aus der Brennstoffzelle führt nur eine Abgasleitung. Dieses Abgas wird teilweise oder vollständig einem Brenner als Oxidationsmittel zugeführt.

Auch die DE 100 59 892 A1 lehrt das Abgas einer Brennstoffzelle als Mischung aus Anodenabgas und Kathodenabgas als gemeinsames Offgas weiterzuleiten und einem Brenner zuzuführen.

WO 00/74164 A1 zeigt eine Brennstoffzelle, deren Anoden- und Kathodenabgas zunächst in einem katalytischen Abgasbrenner und anschließend unter Zugabe von Erdgas in einem Nachbrenner verbrannt wird. Ein Teil des Kathodenabgases wird hierbei am katalytischen Abgasbrenner vorbei in den Nachbrenner geführt. Die Abgase des Nachbrenners werden in einem Wärmetauscher zu Heizzwecken verwendet. Somit wird ein verhältnismäßig großer Anteil Inertgase durch den Prozess geführt, was den Wirkungsgrad der Gesamtanlage verschlechtert.

Der Erfindung liegt die Aufgabe zugrunde, bei einer Kombination eines Heizgerätes mit einer Brennstoffzellenanlage den Abgasmassenstrom zu reduzieren, wodurch geringere Abgasquerschnitte möglich sind und andererseits das Brennstoffzellenabgas so weit wie möglich thermisch zu nutzen.

Erfindungsgemäß wird dies gemäß den Merkmalen des unabhängigen Verfahrensanspruchs 1 dadurch gelöst, dass zumindest ein Teil des Kathodenabgases der Brennstoffzelle dem Heizgerät als Oxidationsmittel zugeführt wird, wobei eine Vorrichtung zur Regelung des Brennstoff-Luft-Verhältnisses vorgesehen ist.

Gemäß den Merkmalen des anhängigen Verfahrensanspruchs 2 wird dem Heizgerät neben dem Kathodenabgas zusätzlich Frischluft zugeführt. Gemäß den Merkmalen des anhängigen Anspruchs 3 wird die Menge des dem Heizgerät zugeführten Oxidationsmittels erhöht, wenn der Sauerstoffpartialdruck im Abgas des Heizgerätes einen vorgegebenen Wert unterschreitet oder der KohlenmonOxidanteil im Abgas einen vorgegebenen Wert überschreitet.

Der Vorrichtungsanspruch schützt eine Kombination eines Heizgerätes mit einer Brennstoffzellenanlage, welche zur Durchführung des zuvor beschriebenen Verfahrens geeignet ist.

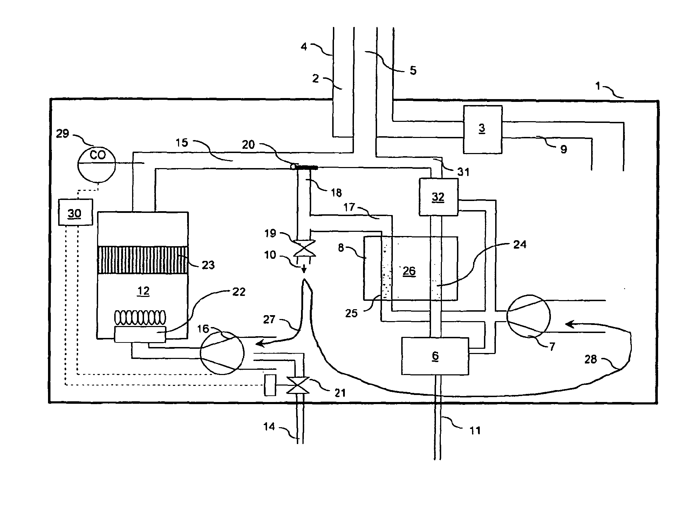

Die Erfindung wird nun anhand der Figur detailliert erläutert.

Die Figur zeigt eine Brennstoffzellenanlage mit einem Heizgerät 12, welche sich gemeinsam in einer Unterdruckkammer 1 befinden. Die Brennstoffzellenanlage verfügt über eine Brennstoffzelle 8, welche eine Anode 24, eine Kathode 25, ein dazwischenliegendes Elektrolyt 26, als auch einen Reformer 6 beinhaltet. Der Reformer 6 verfügt über eine nicht explizit dargestellte Brenngasentschwefelung, einen Shiftconverter und eine Gasfeinreinigung. Dem Reformer 6 wird über eine Brennstoffleitung 11 Brennstoff zugeführt. Die Ausgangsleitung des Reformers 6 mündet in die Anode 24. Das Innere der Unterdruckkammer 1 ist über ein Gebläse 7 mit der Kathode 25 der Brennstoffzelle 8, als auch dem Reformer 6 verbunden. Das Heizgerät 12 verfügt über einen Brenner 22, welchem über ein Gebläse 16 und den Luftansaugtrichter 13 ein Oxidationsmittel, als auch über die Brennstoffleitung 14 und die Gasarmatur 21 ein Brennstoff zugeführt wird. Gebläse 16 und Gasarmatur 21 sind mit einer Regelung 30 verbunden. Oberhalb des Brenners 22 befindet sich ein Wärmetauscher 23, dem sich eine Abgasleitung 15 anschließt. In der Abgasleitung 15 befindet sich ein Abgassensor 29, welcher mit der Regelung 30 verbunden ist. Die Abgasleitung 15 des Heizgerätes 12 mündet in die Abgasleitung 5 eines koaxialen Abgasrohres 4. Um die Abgasleitung 5 des koaxialen Abgasrohres 4 ist eine Frischluftleitung 2 angeordnet. Diese führt zu einem Luftfilter 3, der wiederum über eine Frischluftleitung 9 in die Unterdruckkammer 1 mündet.

Über eine Anodenabgasleitung 31, in der sich ein Nachbrenner 32 befindet, ist die Anode 24 der Brennstoffzelle 8 mit der Abgasleitung 5 des koaxialen Abgasrohres verbunden. Die Abgasleitung 15 des Heizgerätes 12 und die Anodenabgasleitung 31 münden T-förmig in die Abgasleitung 5. Eine Kathodenabluftleitung 17 führt von der Kathode 25 der Brennstoffzelle 8 zu einer Zuleitung 18, welche einerseits in die Abgasleitung 15 des Heizgerätes 12 mündet und andererseits in ein Absperrorgan 19, welches die Zuleitung 18 vom Innenraum der Unterdruckkammer 1 trennt. An der Einmündung der Zuleitung 18 in die Abgasleitung 15 befindet sich eine Abgasklappe 20.

Handelt es sich bei der Brennstoffzelle um eine PEM Niedertemperaturbrennstoffzelle, so findet die Oxidation auf der Kathodenseite statt. Dies bedeutet, dass das Kathodenabgas über einen hohen Wasserdampfanteil verfügt. Handelt es sich bei der Brennstoffzelle um eine SOFC Hochtemperaturbrennstoffzelle, so findet die Oxidation auf der Anodenseite statt. Dies hat zur Folge, dass das Anodenabgas feucht ist, während das Kathodenabgas im Falle von Luft über einen erhöhten Stickstoffanteil und reduzierten Sauerstoffanteil im Vergleich zur Luft verfügt. Das Kathodenabgas bei SOFC Brennstoffzellen ist jedoch in der Regel relativ trocken und auf einem hohen vergleichsweise Temperaturniveau.

Bei reinem Brennstoffzellenbetrieb gelangt Frischluft über die Frischluftleitung 2 und den Luftfilter 3 sowie die Frischluftleitung 9 in die Unterdruckkammer 1. Von dort wird die Luft über das Gebläse 7 einerseits in die Kathode 25 und andererseits in den Reformer 6 gefördert. Im Reformer 6 wird Brennstoff, welcher über die Brennstoffleitung 11 zugeführt wird, mit Luftsauerstoff zu einem wasserstoffreichem Gas und inerten Gasen (vorwiegend Kohlendioxid, Stickstoff, Wasserdampf) verarbeitet. Das wasserstoffreiche Gas wird der Anode 24 zugeführt. Sauerstoff gelangt von der Kathode 25 über den Elektrolyten 26 zur Anode 24. Hierbei entsteht ein elektrischer Stromfluss und Wärme. Die Vorrichtung zur Abnahme der elektrischen als auch thermischen Energie sind in der Figur nicht dargestellt. Das Anodenabgas wird über die Anodenabgasleitung 31 zur Abgasleitung 5 gefördert. Im Nachbrenner 32 werden unverbrannte Brenngase mit Luft vorzugsweise katalytisch verbrannt. Das Kathodenabgas kann nun entweder über die Kathodenabluftleitung 17 und die Zuleitung 18 in die Abgasleitung 5 oder über das Absperrorgan 19 in die Unterdruckkammer 1 geleitet werden. Bei zumindest teilweise geöffnetem Sperrorgan 19 gelangt ein Kathodenabluftstrom 10 in die Unterdruckkammer 1. Dieser Kathodenabluftstrom 10 kann als Strömung 28 wieder zum Gebläse 7 geleitet werden und erneut für die Brennstoffzellenreaktion Verwendung finden. Hierbei ist darauf zu achten, dass der Sauerstoffpartialdruck stetig abnimmt, weshalb eine gewisse Rückführung des Kathodenabgases möglich ist, jedoch für den stetigen Betrieb Frischluftzufuhr notwendig ist. Kathodenabluft kann bei geöffneter Abgasklappe 20 in die Abgasleitung 5 gelangen.

Als Oxidationsmittel kann somit einerseits Kathodenabgas, andererseits Frischluft und letztlich eine Kombination aus beidem verwendet werden.

Bei reinem Heizgerätebetrieb wird die Abgasklappe 20 geschlossen, so dass kein Abgas über die Zuleitung 18 in die Brennstoffzelle 8 gelangen kann. Dies ist z. B. deshalb notwendig, weil das Abgas des Heizgerätes 12 die Brennstoffzelle 8 beschädigen würde. So verfügt Erdgas als Odorierungsmittel über Tetrahydrothiophen, welches Schwefel beinhaltet und zu einer Beschädigung der Brennstoffzelle 8 führen würde. Je nach Wärmeanforderung steuert die Regelung 30 das Gebläse 16 des Heizgerätes 12 an. Je nach Öffnungsgrad der Gasarmatur 21 wird eine größere oder kleinere Menge Brenngas dem Benner 22 zugeführt, die heißen Brennerabgase werden am Wärmetauscher 23 abgekühlt. Die abgekühlten Verbrennungsgase gelangen über die Abgasleitung 15 in die Abgasleitung 5 des koaxialen Abgasrohres 4. Mittels eines KohlenmonOxidsensors 29 in der Abgasleitung 15 kann das Heizgerät 12 auf ein optimales Brennstoff-Luft-Verhältnis eingestellt werden. Ein Verfahren zu einer derartigen Regelung ist z. B. in DE 103 00 602 A1 beschrieben.

Werden Brennstoffzellenanlage und Heizgerät 12 gleichzeitig betrieben, so wird das Absperrorgan 19 zumindest teilweise geöffnet, wodurch ein Kathodenabgasstrom 10 über den Strömungsweg 27 zum Luftansaugtrichter 13 des Heizgerätes 12 gelangt. Wird viel Kathodenabgas der Brennstoffzellenanlage dem Heizgerät 12 zugeführt, so hat dies zur Folge, dass auf Grund des relativ geringen Sauerstoffpartialdruckes im Kathodenabgas das Heizgerät 12 mit vergleichsweise geringem Luftüberschuss betrieben wird. Die Drehzahl des Gebläses 16 wird nun erhöht, um dies auszugleichen. Über den höheren Volumenstrom, bestehend aus einer Mischung aus Frischluft und Kathodenabgas wird nun dem Brenner 12 ausreichend Sauerstoff zur Verfügung gestellt.

Es besteht einerseits die Möglichkeit, dass ein Kalibrierungsverfahren gemäß DE 103 00 602 A1 durchgeführt wird. Dies bedeutet, dass das Brennstoff-Luft-Gemisch zunächst angefettet wird, bis ein erhöhter KohlenmonOxidwert gemessen werden kann. Dies ist ein Zeichen für eine nachstöchiometrische Verbrennung (λ < 1,1). Nun wird die Drehzahl des Gebläses 16 um einen bestimmten Betrag, beispielsweise um 25%, erhöht.

Andererseits kann auf eine Nachkalibrierung so lange verzichtet werden, solange mit Hilfe des CO-Sensors 29 keine überhöhten KohlenmonOxidkonzentrationen gemessen werden.

Alternativ zur Messung des KohlenmonOxidanteils kann auch mit Hilfe einer Lambda-Sonde der Luftüberschuss gemessen werden.

Da SOFC Brennstoffzellen in der Regel mit einem Luftüberschuss λ zwischen 3 und 5 betrieben werden, verfügt Kathodenabgas von SOFC Brennstoffzellen über einen erheblichen Sauerstoffanteil, der somit sinnvoll genutzt werden kann.

## Patentansprüche

1. Verfahren zum Betreiben einer Kombination eines Heizgeräts (12), welches über eine Vorrichtung (16, 21, 29, 30) zur Regelung des Brennstoff-Luft-Verhältnisses verfügt, mit einer Brennstoffzellenanlage, wobei die Brennstoffzelle (8) über eine Anode (24) und eine Kathode (25) verfügt, wobei die Kathode (25) der Brennstoffzelle (8) sauerstoffführend, vorzugsweise luftführend ist, **dadurch gekennzeichnet, dass** das Anodenabgas der Brennstoffzelle (8) zu einer Abgasleitung (5) gefördert wird, während zumindest ein Teil des Kathodenabgases der Brennstoffzelle (8) dem Heizgerät (12) zugeführt wird und die Menge des dem Heizgerät (12) zugeführten Oxidationsmittel in Abhängigkeit des Signals der Vorrichtung (16, 21, 29, 30) zur Regelung des Brennstoff-Luft-Verhältnisses geregelt wird.

2. Verfahren zum Betreiben einer Kombination eines Heizgeräts (12) mit einer Brennstoffzellenanlage nach Anspruch 1, **dadurch gekennzeichnet, dass** das Heizgerät (12) neben dem Kathodenabgas Frischluft zugeführt bekommt.

3. Verfahren zum Betreiben einer Kombination eines Heizgeräts mit einer Brennstoffzellenanlage nach Anspruch 1 oder 2, **dadurch gekennzeichnet, dass** die Menge des dem Heizgerät zugeführten Oxidationsmittels erhöht wird, wenn der Sauerstoffpartialdruck im Abgas des Heizgerätes einen vorgegebenen Wert unterschreitet oder wenn der Kohlenmonoxidanteil im Abgas des Heizgerätes einen vorgegebenen Wert überschreitet.

4. Kombination eines Heizgeräts (12), welches über eine Vorrichtung (16, 21, 29, 30) zur Regelung des Brennstoff-Luft-Verhältnisses verfügt, mit einer Brennstoffzellenanlage, wobei die Kathode (25) der Brennstoffzelle (8) sauerstoffführend, vorzugsweise luftführend ist, **dadurch gekennzeichnet, dass** eine Kathodenabgasführung der Brennstoffzelle (8) derart mündet, dass Kathodenabgas in eine Vorrichtung zur Förderung des Oxidationsmittels des Heizgeräts (12) gelangt und die Vorrichtung (16,21,29,30) zur Regelung des Brennstoff-Luft-Verhältnisses über einen Abgassensor, (29) vorzugsweise Kohlenmonoxid- oder Sauerstoffsensor verfügt, und dass das Anodenabger der Brennstollzelle (8) zu einer Abgasleitung (5) gefördert wird.

## Claims

1. Method for the operation of a combination of a heating apparatus (12), which possesses a device (16, 21, 29, 30) for the regulation of the fuel-air ratio, with a fuel cell system, wherein the fuel cell (8) possesses an anode (24) and a cathode (25), wherein the cathode (25) of the fuel cell (8) is oxygen-conducting, preferably air-conducting, **characterised in that** the anode exhaust gas of the fuel cell (8) is conveyed to an exhaust gas line (5), while at least one part of the cathode exhaust gas of the fuel cell (8) is supplied to the heating apparatus (12) and the quantity of oxidising agent supplied to the heating apparatus (12) is regulated depending on the signal of the device (16, 21, 29, 30) for the regulation of the fuel-air ratio.

2. Method for the operation of a combination of a heating apparatus (12) with a fuel cell system according to claim 1, **characterised in that** the heating apparatus (12) receives fresh air as well as the cathode exhaust gas.

3. Method for the operation of a combination of a heating apparatus with a fuel cell system according to claim 1 or 2, **characterised in that** the quantity of the oxidising agent supplied to the heating apparatus is increased when the oxygen partial pressure in the exhaust gas of the heating apparatus falls below a predetermined value or when the carbon monoxide proportion in the exhaust gas of the heating apparatus exceeds a predetermined value.

4. Combination of a heating apparatus (12), which possesses a device (16, 21, 29, 30) for the regulation of the fuel-air ratio, with a fuel cell system, wherein the cathode (25) of the fuel cell (8) is oxygen-conducting, preferably air-conducting, **characterised in that** a cathode exhaust gas routing of the fuel cell (8) flows in such a way that cathode exhaust gas arrives at a device for conveying the oxidising agent of the heating apparatus (12) and the device (16, 21, 29, 30) for the regulation of the fuel-air ratio possesses an exhaust gas sensor (29), preferably a carbon monoxide or oxygen sensor, and the anode exhaust gas of the fuel cell (8) is conveyed to an exhaust gas line (5).

## Revendications

1. Procédé d'exploitation d'une combinaison d'un appareil de chauffage (12), lequel dispose d'un système (16, 21, 29, 30) de réglage du rapport combustible/air, avec un dispositif de cellule de combustible, la cellule de combustible (8) disposant d'une anode (24) et d'une cathode (25), la cathode (25) de la cellule de combustible (8) conduisant de l'oxygène, de préférence de l'air, **caractérisé en ce que** le gaz perdu de l'anode de la cellule de combustible (8) est acheminé vers un conduit de gaz perdu (5), alors qu'au moins une partie du gaz perdu de la cathode de la cellule de combustible (8) est conduite dans l'appareil de chauffage (12) et que la quantité du moyen d'oxydation conduit dans l'appareil de chauffage (12) est réglée en fonction du signal du système (16, 21, 29, 30) de réglage du rapport combustible/air.

2. Procédé d'exploitation d'une combinaison d'un appareil de chauffage (12) avec un dispositif de cellule de combustible selon la revendication 1, **caractérisé en ce que** l'appareil de chauffage (12) reçoit de l'air frais à côté du gaz perdu de la cathode.

3. Procédé d'exploitation d'une combinaison d'un appareil de chauffage avec un dispositif de cellule de combustible selon la revendication 1 ou 2, **caractérisé en ce que** la quantité du moyen d'oxydation conduit dans l'appareil de chauffage est augmentée lorsque la pression partielle d'oxygène dans le gaz perdu de l'appareil de chauffage est inférieure à une valeur prédéfinie ou lorsque la proportion de monoxyde de carbone dans le gaz perdu de l'appareil de chauffage est supérieure à une valeur prédéfinie.

4. Combinaison d'un appareil de chauffage (12), lequel dispose d'un système (16, 21, 29, 30) de réglage du rapport combustible/air, avec un dispositif de cellule de combustible, la cathode (25) de la cellule de combustible (8) conduisant de l'oxygène, de préférence de l'air, **caractérisée en ce qu'**un conduit de gaz perdu de la cathode de la cellule de combustible (8) débouche, de sorte que le gaz perdu de la cathode parvient dans un dispositif destiné à acheminer le moyen d'oxydation de l'appareil de chauffage (12) et **en ce que** le système (16, 21, 29, 30) de réglage du rapport combustible/air dispose d'un détecteur de gaz perdu (29), de préférence d'un détecteur de monoxyde de carbone ou d'oxygène, et **en ce que** le gaz perdu de l'anode de la cellule de combustible (8) est acheminé vers un conduit de gaz perdu (5).
